(19) Europäisches Patentamt
European Patent Office
Office européen des brevets

(11) **EP 2 940 103 B1**

(12) **EUROPEAN PATENT SPECIFICATION**

(45) Date of publication and mention
of the grant of the patent:
**27.01.2021 Bulletin 2021/04**

(51) Int Cl.:
**C10G 3/00** *(2006.01)*      **C10G 50/00** *(2006.01)*
**C07C 1/20** *(2006.01)*      **C10L 1/06** *(2006.01)*

(21) Application number: **15165839.0**

(22) Date of filing: **30.04.2015**

(54) **A METHOD FOR OBTAINING BIOFUELS USING ETHANOL, OR MIXTURES OF ALCOHOL AS BIOFUEL OR BIOCOMPONENT**

VERFAHREN ZUR HERSTELLUNG VON BIOBRENNSTOFFEN MIT ETHANOL ODER ALKOHOLGEMISCHEN ALS BIOTREIBSTOFF ODER BIOKOMPONENTE

PROCEDE D'OBTENTION DE BIOCARBURANTS A PARTIR D'ETHANOL OU DE MELANGES D'ALCOOL COMME BIOCARBURANT OU BIOCOMPOSANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2014 PL 40808114**

(43) Date of publication of application:
**04.11.2015 Bulletin 2015/45**

(73) Proprietor: **Ekobenz Spolka z Ograniczona Odpowiedzialnoscia**
**20-204 Lublin (PL)**

(72) Inventors:
• **Jablonski, Stanislaw**
**03-134 Warszawa (PL)**
• **Grzegorczyk, Wieslaw**
**20-244 Lublin (PL)**
• **Taras, Dariusz**
**21-040 Swidnik (PL)**

(74) Representative: **Twardowska-Czerwinska, Aleksandra et al**
**Kulikowska & Kulikowski**
**Roma Office Center**
**ul.Nowogrodzka 47A**
**00-695 Warszawa (PL)**

(56) References cited:
**US-A- 4 621 164      US-A1- 2012 004 481**

• **Joanna: "Assessments of changes selected properties of fuels during their storage", , 31 December 2011 (2011-12-31), XP055206799, Retrieved from the Internet: URL:http://www.chemikinternational.com/pdf /2011/06_2011/CHEMIK_2011_65_6_525-530.pdf [retrieved on 2015-08-07]**

**Description**

The subject of the present invention is a method for the preparation of a synthetic biofuel using ethanol or its mixtures. The product of this method is a biofuel having the composition and the properties of commercial petroleum motor fuels or a biocomponent for formulating compound motor fuels.

The method according to the present invention solves the problem of implementation, on an industrial scale, of a process of conversion of ethanol or its mixtures into a mixture of synthetic hydrocarbons having the composition and the properties of petroleum products, in particular petroleum-based motor fuels. The invention makes it possible to carry out the process in a simple design of the contact section with a bed operating in the adiabatic or nearly adiabatic regime, in corrosion-free conditions and in moderate ranges of temperatures and pressures.

Petroleum is the source for acquiring motor fuels in classical methods. Progressive climate change caused by, among other things, emission of carbon dioxide as a by-product of combustion, have forced our civilization to seek alternative, renewable energy sources.

A new group of motor fuels are biofuels which are esters of fatty and/or animal acids with alcohols and a variety of components, known among other things from the Polish Patent specifications PL163379 and PL197375, or mixtures of fuels and esters of fatty acids and alcohols, known, among other things, from the patent specifications US5578090 and PL163379. Within this group there are also methods to obtain components of biofuels through reactions of natural fats and mixtures of alcohols in the presence of low molecular weight carboxylic acid additives, such as those described in the Polish patent specification PL206668. Known drawbacks of fatty acid ester-based biofuels, inter alia, their limited storage stability, have created a need to seek alternative methods for processing natural fats to renewable fuels. One such method is the HVO technology, known, inter alia, from the patent specifications EP2141217 or EG25682, which consists in catalytic hydro-conversion of fats resulting in a mixture of paraffin hydrocarbons free of oxygen compounds and with reduced sulfur content. A major flaw of this group of liquid renewable fuels, however, is the lack of aromatic compounds that would provide the required lubrication properties and prevent failures of fuel systems.

Another known method of processing biomass into biofuels is the gasification of biomass followed by synthesis of hydrocarbons via the Fischer-Tropsch route. Another disadvantage of this process route is the need to use high-temperature gasification operations as well as the irrepeatability of the production charges, and-just as it is in the case of natural fats hydroconversion products (HVO)-the lack of aromatic hydrocarbons, particularly desirable in fuels for spark ignition engines.

Another group of biofuels are physical mixtures of petroleum fuels, hydrocarbon fractions and vegetable oils with alcohols and with all sorts of value-added components. For example, US 4359324 discloses a biofuel containing vegetable oils with the addition of alcohols, and US45009953 discloses a mixture of gas oils and/or heavy oils with alcohol and gasoline. Polish patent specification PL 192225 discloses a biofuel which is a mixture of ethanol with a mixture of aliphatic hydrocarbons, vegetable oils or their derivatives with the addition of corrosion inhibitors. A biofuel known from GB136452 is a mixture of petroleum hydrocarbons, ethanol and fatty acids.

Biofuels that are physical mixtures of ethanol have a number of disadvantages that to a large extent restrict or even prevent their use. For example, energy density of alcohols is around 60-70% lower than that of hydrocarbons, alcohols are characterized by relatively strong polarity, which translates to higher partial vapor pressure above fuel surface and contributes to higher emissions of harmful contaminants to the environment; they exhibit a strong affinity to absorb water. In addition, ethanol is not a completely passive component. Due to its chemical reactivity and physical characteristics it may damage the pipelines or the sealing components of fuel systems.

On the other hand, however, ethanol is a very attractive raw material for the preparation of motor fuels. Contrary to oil, it is non-toxic to the environment and, above all, can be obtained from biomass. Known methods of chemical binding of ethanol have relied on the already cited methods of transesterification of animal and/or vegetable fats resulting in the formation of a very troublesome byproduct, namely glycerol, and another product which is only usable in compression-ignition engines.

Also known are methods for obtaining biofuels via other chemical processes. For example, Polish patent specification PL 208439 discloses a biofuel which is a product of reaction of carbohydrates with ketones in acidic conditions.

Known from WO/2010/14834 is an integrated system for biofuel processing, which includes an operation of obtaining a motor biofuel from alcohols. This operation, according to the description, is carried out in two steps, the first being dehydration of an alcohol to olefins, followed by oligomerizaton to liquid hydrocarbon fuels, whereas in that step at least a portion of energy obtained from other operations within the integrated processing system is used, for example from combustion or gasification of residual biomass into carbon monoxide and

hydrogen. Alcohol produced by fermentation can be converted to gasoline, as for example in US 4621164, where the process is carried out in the presence of equimolar quantity of water.

Also known from the literature are catalysts for conversion of ethanol to hydrocarbons. It is known from scientific literature that the process of converting alcohols to hydrocarbons can be carried out on a ZSM-5 catalyst, possibly with aluminum ions substituted in part by other metals, e.g. iron. Available research and technical descriptions indicate that the liquid hydrocarbon process yields achieved by the authors are unsatisfactory. According to the patent specification PL 207580, a catalyst for the synthesis of gasoline should contain active sites in the form of copper ions in a coordinated octahedral structure; that catalyst, however, also does not ensure reaction selectivity toward hydrocarbons, rather, above all, toward ETBE and large quantities of carbon oxides.

There is also known from US 2012/004481 A1 an invention that refers to a method of obtaining of biofuel with use of ethanol in the catalytic process suitable for industrial use.

The conversion reaction is preceded by purification step of the product to be reacted, which has to contain at least 50% ethanol. Such biofuel is obtained in multistage process with separation of intermediates after the first step, where the olefin-forming reaction and oligomerization reaction proceed in different reactors and with use of different catalysts. The processes are run separately and in different conditions.

Unexpectedly, it was found that the process of converting ethanol to synthetic hydrocarbons can be carried out with high selectivity and yield with respect to the liquid hydrocarbons fraction, without having to supply the reaction mixture stream with equimolar quantities of water, and without any additional amount of heat, in a one-step process carried out under controlled conditions, in moderate temperature and pressure ranges, thanks to simultaneously feeding to the reaction zone, at defined proportions, gas mixtures of non-oxidizing nature. The ethanol-to-hydrocarbon mixture conversion process runs with high yields in the presence of a stream of other gases, such as light hydrocarbons, and most preferably of hydrocarbons separated from the liquid phase of the products and/or their mixtures with components having a non-oxidizing nature, such as, for example, nitrogen, hydrogen, or carbon dioxide. Taking into account the heat exchangers in the catalytic section, the whole process runs autothermally under predefined temperature conditions, and does not require additional supply of thermal energy. It was also found that supplying the reactants stream with certain components, including hydrocarbons, allows for controlling the selectivity of the process toward the desired petroleum products.

Additionally, it was found that, in addition to aliphatic hydrocarbons and naphthenes, aromatic hydrocarbons also form in the process conditions according to the present invention, especially benzene derivatives desirable both for compression-ignition engine fuels (to provide the required lubrication properties), as well as spark ignition engines (to increase the octane number). The above mentioned feature, i.e. the presence of aromatic hydrocarbons up to 35% v/v, distinguishes the product obtained according to the present invention from fuels obtained in other, known biomass processing methods.

In particular, the above objects are achieved by a method according to claim 1. Preferred embodiments are subject of dependent claims.

The essence of the invention lies in the fact that ethanol, especially from alcoholic fermentation, at a concentration at least 10% w/w, or a mixture of ethanol with other alcohols and/or organic oxy compounds such as aldehydes, ketones, esters, with carbon content not higher than C5 and/or distillation by-products waste formed during the ethanol separation operation, such as fusels, fusel oil and/or the "heads", prior to the catalytic conversion process is diluted with a gas containing hydrocarbons and the conversion process is carried out in one stage in the gas phase at a temperature of 250-450°C, preferably 270-350°C and at a pressure up to 50 bar with at least two alternately operated, preferably four connected in series, flow reactors with heat exchangers, without supply of equimolar quantities water and without any energy from any external source, whereas from the reaction product at 100°C, preferably 30-80°C, and at a pressure of up to 20 bar, the "hearts" fraction is recovered and the remainder, entirely or partially, are used to dilute the raw material containing alcohol or its mixture in a quantity of 0.5:1 to 20:1. The controlling of selectivity of the process according to the invention is carried out, beside varying the temperature and the load, by controlled separation of the products stream and directing certain components of the reaction for dilution of the raw material. Prior to feeding the reactants to a subsequent catalyst layer or to a next-in-series reactor, the temperature of the reactants is lowered so as to avoid exceeding by the subsequent catalyst layer a temperature above 500°C, most preferably to a temperature 270-330°C.

Preferably, the dilution is performed on an alcohol or a mixture of alcohols transformed into the vapor state.

Preferably, the catalytic conversion is performed on a mixture of ethyl alcohol with other alcohols and/or compounds of other type such as aldehydes, ketones, esters in the presence of lower hydrocarbons up to C5.

Preferably, the catalytic conversion is performed on a mixture of ethyl alcohol with a mixture of distillation by-products originating from distillation or rectification of ethanol, i.e. fusels, fusel oil and/or the "heads".

Preferably, as the gas containing hydrocarbons there is used a by-product of the process after separation of the "hearts" fraction, said by-product used in in a quantity 3:1 to 8:1 in relation to the weight of the raw materials containing alcohol.

Preferably, as the gas containing non oxidizing substances there are used lower hydrocarbons of non-anthropogenic origin or their mixtures, especially ethane, propane, butane, propene, ethene or butene.

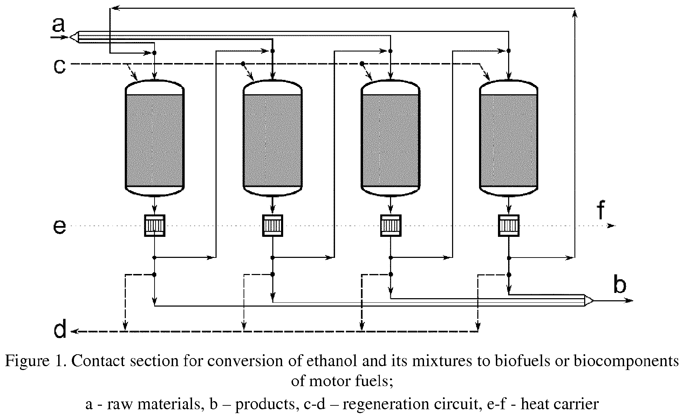

The process of preparing a biocomponent or a synthetic motor fuel according to the present invention is carried out in a contact section, where flow reactors are filled with known catalysts, preferably from a group of zeolite-type aluminosilicates. The contact section comprises at least two reactors, most preferably four reactors, of which alternately one at a time is subjected to regeneration, and the other reactors operate connected in series. The layout of the system as depicted in the attached schematic drawing (Fig. 1) ensures that alternately one unit in sequence is put off-line for regeneration while the remaining units are operating.

The product obtained from the process of the present invention is biofuel. The biofuel, having a composition and properties of petroleum-based motor fuels according to the Polish standard PN-EN 228, being a mixture of oxygen compounds at quantities specified in the above cited standard, is characterized in that it is a synthetic hydrocarbons fraction with boiling temperature of up to 210°C, with aromatic compounds content up to 35% v/v, being a product of conversion of ethanol, especially that coming from alcoholic fermentation or a mixture of ethanol with other alcohols, carried out in presence of hydrocarbons or other non-oxidating substances, whereas the content of sulfur and metals including lead is at 0 level, and benzene occurs at an amount lower than 0.2% v/v.

Preferably, the biofuel contains 100% carbon of non-anthropogenic origin ($C^{14}$ isotope share determined by the ASTM D6866-12 method is close to that in atmospheric $CO_2$, i.e. isotope ratio is equal to $C^{12}/C^{14} = 10^{12}$), which occurs when the conversion process does not use fossil-based raw materials or additives but only uses raw materials of vegetable or animal origin.

The invention solves the problem of chemically converting ethanol and other alcohols in order to obtain synthetic biofuels with properties of petroleum-based fuels, in one production cycle, without using any other energy supplied from any external source and without creating any other by-product that would be difficult to dispose or utilize. The invention describes a direct transition from ethanol to biofuels avoiding any other intermediate operations. The process runs at relatively low temperatures, with the use of ethanol or any mixture thereof at any concentration. The process runs with a complete, 100% conversion of ethanol and other alcohols present in the raw material stream.

The product obtained according to the process of the present invention does not contain sulfur and heavy metals at levels present in petroleum fuels and is a physical mixture of hydrocarbons with trace-level contents of oxygenate derivatives such as alcohols and ethers (allowed are small quantities of ethers desirable in spark-ignition engine fuels: MTBE, TAME, ETBE, and traces of ethyl alcohol and tert-butyl alcohol (TBA), whereas the total content of these compounds does not exceed 0.75% wt). The product according to the invention exhibits performance characteristic of petroleum-based motor fuels.

The product obtained through the conversion of ethanol according to the present invention is a mixture of hydrocarbons, and, following classic refinery operations is intended for direct use as a genuine motor biofuel or a biocomponent for commercial motor fuel blends.

The product has the composition and performance of petroleum-based motor fuels, additionally free of compounds of sulfur and metals including lead that are typical of petroleum products, and contains benzene in quantities of less than 0,2% v/v and ethanol in quantities of less than 0,1% v/v.

The essence of the present invention will be illustrated by the following examples, where the term "contact section" in the presented descriptions includes one (of two), two (of three) or three (of four) of flow reactors operating in series, filled with known type of catalyst from the aluminosilicate group of the zeolite type ZSM-5 with SiO2/Al2O3 ratio from 50 to 280, in the shape of "macaroni" with a diameter of 1.6 mm or 3.2 mm and length up to 20 mm. In all the examples presented below total conversion of ethanol was obtained.

Example 1

A process of converting bioethanol to a biocomponent of synthetic motor fuels was carried out at a pressure of 20 bar, feeding a reactor filled with zeolite catalyst bed ($SiO_2/Al_2O_3$ ratio = 50, catalyst shape diameter: 1.6 mm, surface area determined by BET = 340 $m^2/g$, and average size of crystallites determined by XRD d = 10.4 nm) at a temperature of 300°C, with a stream of ethanol and gas mixture having composition in percentage by weight: 0.6% methane, 20.1% ethane, 13.2% ethylene, 26.2% propane, 6.5% propene, 29.4% butanes (including 13.1% n-butane), 3.1% 1-butene and 0.9% nitrogen. Prior to entering the reaction zone, the reactants were contacted at a weight ratio of ethanol: gas mixture of 1: 4.0. Ethanol was fed into the stream at a rate of 0.81 $kg_{EtOH}/h \cdot kg_{cat}$ in the form of vapors having temperature of 300°C, obtained by evaporation of a 93.8% wt. aqueous ethanol solution and heating in a superheater to the temperature of the stream. Reaction gases leaving the contact section at 360°C were first directed to a heat exchange section for heat recovery and then to a separator operating under pressure of 2 bar and at a temperature of 60°C. The liquid phase was separated into a hydrocarbon phase and a water phase in a classic gravity clarifier. The conversion ran with 80-94% efficiency with respect to liquid hydrocarbons of the gasoline fraction at complete (100%) raw material conversion. The properties of the hydrocarbon fraction of the effluent collected after 100 hours of plant operation are presented in Table 1.

**Table 1 Properties of crude effluent from Example 1 (before stabilization and refining)**

| degree of conversion % | Oxygen compounds % w/w | Olefins % Vol | Paraffin + naphthenes % Vol | Aromatics % Vol | Benzene % Vol | Xylene % Vol | RON | T50 | T90 |
|---|---|---|---|---|---|---|---|---|---|
| 89.9 | 0.58 | 16.5 | 57.5 | 24.1 | 0.00 | 2.4 | 96.9 | 125 | 215 |

Example 2

The process of converting bioethanol to a synthetic biocomponent of motor fuel was carried out at a pressure of 10 bar, feeding the catalytic section consisting of two reactors connected in series, each filled with zeolite catalyst bed ($SiO_2$/$Al_2O_3$ ratio = 80, catalyst shape diameter: 1.6 mm, surface area determined according to BET = 363 $m^2$/g, and average size of crystallites determined by XRD d = 7.6 nm) at a temperature of 280°C, with a stream of ethanol and diluting gases obtained from separation of liquid reaction products at 50°C and 2 bar. The reactants were contacted at ethanol to diluting gas mixture mass ratio of 1: 4.5. Ethanol was fed into the feed stream at a rate of 0.77 $kg_{EtOH}$/h · $kg_{cat}$ as a gas mixture having temperature of 280°C, obtained by evaporation of a 93.8% wt. aqueous ethanol solution and heating in a superheater. The reaction gases leaving the contact section at 340°C were directed to a heat exchange section for heat recovery, and then, after expansion, to a separator (temperature 50°C, pressure 2 bar). The liquid phase was separated into a hydrocarbon phase and a water phase in a classic gravity clarifier. The conversion process ran with 94% efficiency for liquid hydrocarbons of the gasoline fraction. The properties of the hydrocarbon product phase are presented in Table 2.

Example 3

The contact section with the ZSM-5 catalyst bed as in Example 2 was fed with a stream of aqueous solution of ethanol and methanol having the following composition: 84.42%wt EtOH+10.04%wt MeOH+5,54%wt $H_2O$ rate 0.91 $kg_{(EtOH+MeOH)}$/h·$kg_{cat}$. A stream of diluting gases was fed into the reactor at an appropriate rate to ensure keeping mass ratio of the two alcohols (MeOH + EtOH) to the diluting gases at 1 to 4.0. The process was carried out at a pressure of 6 bar. Reaction products were separated at a temperature of 45°C and pressure of 2 bar. Gaseous products were directed to the contact section. The efficiency of the process for liquid hydrocarbon fraction was 89.2%. The properties of the hydrocarbon phase of the product are presented in Table 2

Example 4

The contact section with the ZSM-5 catalyst bed as in Example 2 was supplied with a stream of aqueous solution of ethanol and butanol having the following composition: 84.50%wt EtOH+9.95%wt BuOH+5.55%wt $H_2O$ rate 0.89 $kg_{(EtOH+BuOH)}$/h·$kg_{cat}$. The stream of alcohols was contacted with a steam of diluting gases prior to feeding to the catalyst bed, at the following mass ratio: mass of alcohols : mass of gases like 1 to 3.8. The process was carried out at a pressure of 5.1 bar. Reaction products were separated at a temperature of 50°C and pressure of 1.8 bar. Reactants remaining in the gaseous state were recycled back to the reaction after contacting them with the raw materials stream. The efficiency of the process for liquid hydrocarbon fraction was 96.6%. The properties of the hydrocarbon phase of the product are presented in Table 2.

Example 5

The contact section with the ZSM-5 catalyst bed as in Example 2 was supplied with a stream of ethanol and a hydrocarbon mixture having the following composition: 81.32% w/w EtOH+13.34% w/w liquid hydrocarbons (hydrocarbon mixture composition is given in Table 2) + 5.34% w/w H2O at a rate of 0.79 $kg_{EtOH}$/h · $kg_{cat}$. The liquid raw material stream was evaporated and heated in a superheater to a temperature of 280°C, and then contacted, prior to entering the catalyst bed, with a stream of diluting gases at a mass ratio of 1 to 5.6. The process was carried out at a pressure of 10.6 bar. Reaction products were separated at a temperature of 47°C and pressure of 1 bar. Reactants remaining in the gaseous state were recycled back to reaction after contacting them with the raw materials stream. The efficiency of the process for liquid hydrocarbons fraction was 81.6% and the properties of the product are given in Table 2.

Example 6

A contact section with a zeolite catalyst bed (SiO2/Al2O3 ratio = 280, diameter of shapes 3.2 mm, surface area by BET = 356 $m^2$/g and average size of crystallites determined by XRD d = 5,1 nm), at a temperature of 275°C was supplied with a stream of 61,4% w/w aqueous ethanol solution at a rate of 0.5$kg_{EtOH}$/h · $kg_{cat}$ and a stream of a hydrocarbon mixture: ethane-2.4% w/w, propane-43.0% w/w, butane-53,3% w/w, pentane-1.3% w/w with the content of alkenes below 0.1% w/w, at a rate of 0.05kg/h · $kg_{cat}$. Prior to entering the reaction zone, the stream of liquid raw material was evaporated and then heated in a superheater to a temperature of 275°C, after contacting it with the stream of diluting gases, at a mass ratio of diluting gases to ethanol 6: 1. The process was carried out at a pressure of 20 bar. Reaction products leaving the catalytic section at a temperature of 320°C were cooled down in a heat exchanger section to a temperature of 60°C, then directed to a separator operating at a pressure of 2 bar. The liquid phase was separated in a gravity clarifier.

Uncondensed reactants were recycled back to the reaction zone after contacting them with a stream of raw material vapors. The process ran with 75.3% efficiency for liquid hydrocarbons of the gasoline fraction. The properties of the liquid phase of the product are presented in Table 2

Example 7

A contact section composed of three reactors operating in series, each with a zeolite catalyst bed ($SiO_2/Al_2O_3$ ratio = 80, shape diameter of 1.6 mm, surface area determined by BET = 363 m2/g and average size of crystallites determined by XRD (d) = 7.6 nm), at a temperature 298°C to 304°C, was fed with a stream of ethanol and distillation waste mixtures (fusels) containing organic oxygenate compounds such as alcohols, esters and aldehydes, with total composition as follows: 0.2% w/w methanol + 87.5% w/w ethanol + 2.4% w/w propanol + 1.4% w/w butanol + 0,4% w/w n-amyl alcohol + 0.3% w/w ethyl acetate + 1.3% w/w of acetaldehyde + 6.5% w/w H2O at a rate of 0.70 $kg_{EtoH} \cdot kg_{cat}$.

The stream of the raw material mixture, transformed into vapors having a temperature of 300°C, was contacted prior to entering the catalyst bed with a hot diluting gas stream at a ratio of mass of raw material mixture to mass of diluting gases: 1 to 5.8. The process was carried out at a pressure of 8.0 bar. Reaction products were separated at a temperature of 70°C and pressure of 5.0 bar. Reactants remaining in the gaseous state were recycled back to reaction after contacting them with the raw materials stream. The liquid phase was separated into the hydrocarbon phase and the water phase in a classic gravity clarifier. The conversion process ran with 90,1% efficiency for liquid hydrocarbons of the gasoline fraction. The composition of the effluent obtained is shown in Table 2.

Process efficiency in terms of liquid hydrocarbons was determined by the following formula:

$$W = m_{CxHy} \cdot 100/R \qquad [\%]$$

R-equivalent of hydrocarbon formation from ethanol, adopted in yield calculations, was calculated as the product of the mass of ethanol supplied and molar mass ratio of ethylene to ethanol:

$$R = G_{EtOH} \cdot (M_{C2H4}/M_{EtOH}) = G_{EtOH} \cdot 0,609$$

The equivalent of hydrocarbon formation from a mixture of other oxygenates, adopted to calculate process efficiency, was calculated using the following equations:

$$R = G_{EtOH} \cdot 0,609 + G_{MeOH} \cdot 0,438,$$

$$R = G_{EtOH} \cdot 0,609 + G_{BuOH} \cdot 0,757$$

or

$$R = G_{EtOH} \cdot 0,609 + G_{MeOH} \cdot 0,438 + G_{PrOH} \cdot 0,700 + G_{BuOH} \cdot 0,757 + G_{AmOH} \cdot 0,796 + G_{AlOc} \cdot 0,591 + G_{OcEt} \cdot 0,591$$

where:

$G_{EtOH}$ - mass of ethanol supplied,
$G_{MeOH}$ - mass of methanol supplied,
$G_{PrOH}$ - mass of propanol supplied,
$G_{BuOH}$ - mass of butanol supplied,
$G_{AmOH}$ - mass of pentanol (n-amyl alcohol) supplied,
$G_{AlOc}$ - mass of acetaldehyde supplied,
$G_{OcEt}$ - mass of ethyl acetate supplied,
$m_{CxHy}$ - mass of liquid hydrocarbon fraction in the reaction products.

**Table 2 Properties of crude effluent obtained in a process with circulation of reactants (prior to stabilization and refining)**

| | Quantity in ethanol stream | Effluent properties | | | | | | | | |
|---|---|---|---|---|---|---|---|---|---|---|
| | | Oxygen compds %wt | Olefins %vol | Saturated[1] %vol | Aromatics %vol | Benzene %vol | Xylene %vol | RON | T50 | T90 |
| Example 2 | - | 0.42 | 7.5 | 59.8 | 30.7 | 0.08 | 4.9 | 94.8 | 114 | 208 |
| Example 3 | MeOH | 0.59 | 15.8 | 58.3 | 23.6 | 0.00 | 2.6 | 86.5 | 121 | 212 |
| Example 4 | BuOH[2] | 0.51 | 10.5 | 61.4 | 26.8 | 0.01 | 1.9 | 84.8 | 125 | 219 |
| Example 5 | $C_XH_Y$[3] | 0.55 | 10.1 | 52.3 | 35.4 | 0.00 | 5.2 | 93.9 | 122 | 221 |
| Example 6 | $C_XH_Y$[4] | 0.30 | 8.8 | 61.3 | 28.1 | 0.00 | 3.7 | 90.4 | 118 | 210 |
| Example 7 | Fusels[5] | 0.71 | 9.4 | 52.0 | 37.5 | 0.01 | 5.5 | 95.1 | 124 | 219 |

[1] - paraffins and naphthenes,

[2] - butanol,

[3] - mixture of liquid hydrocarbon fraction (150°C-210°C) separated from reaction products, with the following composition: 17.8% w olefins, 31.3% w naphthenes + paraffins, 50,6%wt. aromatics,

[4] - mixture of hydrocarbons with the following composition: ethane - 1.5% w/w, propane - 43.0% w/w, butane - 53,3% w/w, pentane - 1.3% w/w, and alkenes below 0,1% w/w.

[5] - mixture of non-anthropogenic origin (ethanol + fusels), overall composition: 0.2% w/w methanol + 87.5% w/w ethanol + 2.4% w/w propanol + 1.4% w/w butanol + 0.4% w/w n-amyl alcohol + 0.3% w/w ethyl acetate + 1.3% w/w of acetaldehyde + 6.5% w/w $H_2O$

**Table 3 Properties of biofuels obtained after fractionation of crude product with 80% efficiency with respect to the gasoline fraction**

| | Unit | value | requirements according to PN-EN 228 |
|---|---|---|---|
| MON | | 82[1] | ≥85 |
| density at 15°C | $kg/m^3$ | 747 | 720 - 775 |
| sulfur content | mg/kg | 0 | ≤10,0 |
| lead content | $mg/dm^3$ | ≤2.5 | ≤5.0 |
| resins present | mg/100ml | 1 | ≤5.0 |
| induction period | min | ≥360 | ≥360 |
| corrosion on copper | corrosion class | 1 | 1 |
| appearance | - | clear and transparent | clear and transparent |
| aromatics | $\%_{v/v}$ | 28.5 | ≤35.0 |
| olefins | $\%_{v/v}$ | 4.4 | ≤18.0 |
| benzene | $\%_{v/v}$ | <0.1 | ≤1.0 |
| end-of-distillation temperature | °C | 202 | ≤210 |
| distillation residue | $\%_{v/v}$ | 1.1 | ≤2 |
| oxygenates (in terms of oxygen), including: | $\%_{wag}$ | <0.17 | ≤2.7 |
| methanol | $\%_{v/v}$ | <0.17 | ≤3.0 |
| ethanol | $\%_{v/v}$ | <0.17 | ≤5.0 |

**Claims**

1. Method for preparation of biofuels using ethanol through the conversion of ethanol in a mixture with hydrocarbons, in a catalytic process on a bed of zeolite-type aluminosilicate, most preferably in the presence of a hydrogen form of the zeolite catalyst, **characterized in that** ethanol, especially from alcoholic fermentation, at a concentration of at least 10% w/w, or a mixture of ethanol with other alcohols with molecules containing preferably not more than 5 carbon atoms, prior to the catalytic conversion process is mixed with a diluting gas containing hydrocarbons or a mixture of hydrocarbons with non-oxidating substances, such as nitrogen, hydrogen, or carbon dioxide, and the conversion process is carried out without supplying the reaction mixture stream with equimolar quantities of water, and without any additional amount of heat, in a one-step process in the gas phase at a temperature of 250-450°C, preferably at a temperature of 270-350°C and at a pressure up to 5 MPa (up to 50 bar) using at least two alternately operated, preferably four connected in series, flow reactors, filled with a catalyst from a group of zeolite-type aluminosilicates, each reactor provided with a heat exchanger, and then at a temperature of up to 100°C, preferably 30-80°C, and at a pressure up to 2 MPa (20 bar), the "hearts" fraction is recovered from the reaction product, and the remainder, in whole or in part, is recycled back to dilute the alcohol-containing raw material, wherein as the diluting gas containing hydrocarbons there is used a by-product of the process after separation of the "hearts" fraction, said by-product being used in a quantity of 0.5:1 to 20:1 in relation to the weight of the raw material containing alcohol, whereas in the process there is used a catalyst from the aluminosilicate group of the zeolite type ZSM-5 with $SiO_2/Al_2O_3$ ratio from 50 to 280, in the shape of "macaroni" with a diameter of 1.6 mm or 3.2 mm and length up to 20 mm.

2. Method according to claim 1, **characterized in that** the dilution is performed on an alcohol or a vaporized mixture containing alcohol.

3. Method according to Claim 1, **characterized in that** the catalytic conversion is performed on a mixture of ethanol with other alcohols and/or organic compounds containing oxygen, such as: aldehydes, ketones, esters, preferably with carbon content in the molecule of not more than C5.

4. Method according to Claim 1, **characterized in that** the catalytic conversion is performed on a mixture of ethanol with waste and/or distillation residues formed during ethanol separation, that is, fusels, fusel oil, and/or the "heads".

5. Method according to Claim 1, **characterized in that** as the diluting gas containing hydrocarbons there is used a by-product of the process after separation of the "hearts" fraction, said by-product being used in a quantity of 3:1 to 8:1 in relation to the weight of the raw material containing alcohol.

6. Method according to Claim 1, **characterized in that** as the diluting gas containing non-oxidizing substances there is used a mixture of lower hydrocarbons, preferably up to C5, most preferably a mixture of hydrocarbons of non-anthropogenic origin in an amount by weight from 3: 1 to 8: 1 in relation to the raw material containing alcohol.

7. Method according to Claim 1 to 6, **characterized in that** in the process there are used raw materials of plant and/or animal origin.

**Patentansprüche**

1. Verfahren zur Herstellung von Biokraftstoffen unter Verwendung von Ethanol durch die Umwandlung von Ethanol in einer Mischung mit Kohlenwasserstoffen in einem katalytischen Verfahren auf einem Aluminosilikatbettreaktor vom Zeolithtyp, am bevorzugtesten in Gegenwart einer Wasserstoffform des Zeolith-Katalysators, **dadurch gekennzeichnet, dass** Ethanol, insbesondere aus alkoholischer Gärung, in einer Konzentration von mindestens 10% w/w, oder eine Mischung von Ethanol mit anderen Alkoholen mit Molekülen, die vorzugsweise nicht mehr als 5 Kohlenstoffatome enthalten, verwendet wird, vor dem katalytischen Umwandlungsverfahren mit einem Verdünnungsgas gemischt wird, das Kohlenwasserstoffe oder eine Mischung von Kohlenwasserstoffen mit nichtoxidierenden Substanzen wie Stickstoff, Wasserstoff oder Kohlendioxid enthält, und das Umwandlungsverfahren ohne Zufuhr äquimolarer Wassermengen in den Strom der Reaktionsmischung und ohne zusätzliche Wärmemenge durchgeführt wird, in einem einstufigen Verfahren in der Gasphase bei einer Temperatur von 250-450°C, vorzugsweise bei einer Temperatur von 270-350°C und bei einem Druck bis zu 5 MPa (bis zu 50 Bar) unter Verwendung von mindestens zwei abwechselnd betriebenen, vorzugsweise vier in Reihe geschalteten Strömungsreaktoren, die mit einem Katalysator aus einer Gruppe von Aluminosilikaten vom Zeolithtyp gefüllt sind, wobei jeder Reaktor mit einem Wärmetauscher versehen ist, und dann bei einer Temperatur bis zu 100°C, vorzugsweise 30-80°C, und bei einem Druck bis zu 2 MPa (20 Bar), der Mittellauf (das Herzstück) aus dem Reaktionsprodukt gewonnen wird, und der Rest ganz oder teilweise zurückgeführt wird, um das alkoholhaltige Rohmaterial zu verdünnen, wobei als Verdünnungsgas, das Kohlenwasserstoffe enthält, ein Nebenprodukt des Verfahrens nach Abtrennung des Mittellaufs (das Herzstück) verwendet wird, wobei dieses Nebenprodukt in einer Menge von 0,5:1 bis 20:1 in Bezug auf das Gewicht des alkoholhaltigen Rohmaterials verwendet wird, während in dem Verfahren ein Katalysator aus der Aluminosilikatgruppe des Zeolithtyps ZSM-5 mit einem $SiO_2/Al_2O_3$-Verhältnis von 50 bis 280 in Form von einem "Makkaroni" mit einem Durchmesser von 1,6 mm oder 3,2 mm und einer Länge bis zu 20 mm verwendet wird.

2. Verfahren nach Anspruch 1, **dadurch gekennzeichnet, dass** die Verdünnung an einem Alkohol oder einer verdampften Mischung, die Alkohol enthält, durchgeführt wird.

3. Verfahren nach Anspruch 1, **dadurch gekennzeichnet, dass** die katalytische Umwandlung an einer Mischung von Ethanol mit anderen Alkoholen und/oder organischen Verbindungen, die Sauerstoff enthalten, wie: Aldehyde, Ketone, Ester, vorzugsweise mit einem Kohlenstoffgehalt im Molekül von nicht mehr als C5, durchgeführt wird.

4. Verfahren nach Anspruch 1, **dadurch gekennzeichnet, dass** die katalytische Umwandlung an einem Gemisch von Ethanol mit Destillationsabfällen und/oder Destillationsschlämmen, die bei der Ethanoltrennung entstehen, d.h. Fusel, Fuselöl und/oder dem Vorlauf, durchgeführt wird.

5. Verfahren nach Anspruch 1, **dadurch gekennzeichnet, dass** als kohlenwasserstoffhaltiges Verdünnungsgas ein Nebenprodukt des Verfahrens nach Abtrennung des Mittellaufs (das Herzstück) verwendet wird, wobei dieses Nebenprodukt in einer Menge von 3:1 bis 8:1 im Verhältnis zum Gewicht des alkoholhaltigen Rohstoffs verwendet wird.

**6.** Verfahren nach Anspruch 1, **dadurch gekennzeichnet, dass** als Verdünnungsgas, das nichtoxidierende Substanzen enthält, ein Gemisch von niederen Kohlenwasserstoffen, vorzugsweise bis zu C5, am meisten bevorzugt ein Gemisch von Kohlenwasserstoffen nichtanthropogenen Ursprungs in einer Gewichtsmenge von 3:1 bis 8:1 in Bezug auf das Gewicht des alkoholhaltigen Rohmaterials verwendet wird.

**7.** Verfahren nach den Ansprüchen 1 bis 6, **dadurch gekennzeichnet, dass** in dem Verfahren Rohstoffe pflanzlichen und/oder tierischen Ursprungs verwendet werden.

**Revendications**

**1.** Procédé de préparation de biocarburants utilisant de l'éthanol par conversion d'éthanol en mélange avec des hydrocarbures, dans un procédé catalytique sur un lit d'aluminosilicate de type zéolite, de préférence en présence d'une forme hydrogène du catalyseur zéolitique, **caractérisé en ce que** l'éthanol, en particulier issu de la fermentation alcoolique, à une concentration d'au moins 10% p/p, ou un mélange d'éthanol avec d'autres alcools avec des molécules contenant de préférence pas plus de 5 atomes de carbone, avant le processus de conversion catalytique est mélangé avec un gaz de dilution contenant des hydrocarbures ou un mélange d'hydrocarbures avec des substances non oxydantes, comme l'azote, l'hydrogène ou le dioxyde de carbone, et le processus de conversion est effectué sans alimenter le courant de mélange réactionnel avec des quanitites équimolaires d'eau, et sans aucune quantité supplémentaire de chaleur, dans un processus en une étape en phase gazeuse à une température de 250-450°C, de préférence à une température de 270-350°C et à une pression allant jusqu'à 5 Mpa (jusqu'à 50 bar) en utilisant au moins deux réacteurs à écoulement fonctionnant en alternance, de préférence quatre connectés en série, remplis d'un catalyseur d'un groupe d'aluminosilicates du type zéolite, chaque réacteur pourvu d'un échangeur de chaleur, puis à une température allant jusqu'à 100°C, de préférence 30-80°C, et à une pression allant jusqu'à 2 MPa (20 bar), la fraction « coeurs » est récupérée du produit de la réaction, et le reste, en tout ou en partie, est recyclé pour diluer la matière première contenant de l'alcool, dans lequel comme gaz de dilution contenant des hydrocarbures, on utilise un sous-produit du procédé après séparation de la fraction «cœurs», ledit sous-produit étant utilisé en une quantité de 0,5:1 à 20:1 par rapport au poids de la matière première contenant de l'alcool, alors que dans le procédé on utilise un catalyseur du groupe aluminosilicate du type zéolite ZSM-5 avec le rapport $SiO_2/Al_2O_3$ de 50 à 280, en forme de "macaroni" avec un diamètre de 1,6 mm ou 3,2 mm et une longueur jusqu'à 20 mm.

**2.** Procédé selon la revendication 1, **caractérisé en ce que** la dilution est effectuée sur un alcool ou un mélange vaporisé contenant de l'alcool.

**3.** Procédé selon la revendication 1, **caractérisé en ce que** la conversion catalytique est effectuée sur un mélange d'éthanol avec d'autres alcools et/ou composés organiques contenant de l'oxygène, tels que: aldéhydes, cétones, esters, de préférence à teneur en carbone dans la molécule de pas plus que C5.

**4.** Procédé selon la revendication 1, **caractérisé en ce que** la conversion catalytique est effectuée sur un mélange d'éthanol avec des déchets et/ou des résidus de distillation formés lors de la séparation de l'éthanol, c'est-à-dire des fusels, de l'huile de fusel, et/ou des "têtes".

**5.** Procédé selon la revendication 1, **caractérisé en ce que** comme gaz de dilution contenant des hydrocarbures, on utilise un sous-produit du procédé après séparation de la fraction "coeurs", ledit sous-produit étant utilisé en une quantité de 3:1 à 8:1 par rapport au poids de la matière première contenant de l'alcool.

**6.** Procédé selon la revendication 1, **caractérisé en ce que** comme gaz de dilution contenant des substances non oxydantes, on utilise un mélange d'hydrocarbures inférieurs, de préférence jusqu'à C5, et de préférence un mélange d'hydrocarbures d'origine non anthropique en quantité pondérale de 3:1 à 8:1 par rapport à la matière première contenant de l'alcool.

**7.** Procédé selon les revendications 1 à 6, **caractérisé en ce que** dans le procédé des matières premières d'origine végétale et/ou animale sont utilisées.

Figure 1. Contact section for conversion of ethanol and its mixtures to biofuels or biocomponents of motor fuels;

a - raw materials, b – products, c-d – regeneration circuit, e-f - heat carrier

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 163379
- PL 197375
- US 5578090 A
- PL 206668
- EP 2141217 A
- EG 25682
- US 4359324 A
- US 45009953 B
- PL 192225
- GB 136452 A
- PL 208439
- WO 201014834 A
- US 4621164 A
- PL 207580
- US 2012004481 A1